# EUROPEAN PATENT APPLICATION

(11) **EP 4 722 400 A1**
(43) Date of publication of application: **08.04.2026**
(21) Application number: 24895406.7
(22) Date of filing: 10.05.2024
(51) Int. Cl.: C22C 19/05, C22C 1/02, C22B 9/04, C22B 9/16, B22F 9/14, B22F 1/065

(54) **NICKEL-BASED HIGH-TEMPERATURE ALLOY WITH LOW CRACKING SENSITIVITY COEFFICIENT, MANUFACTURING METHOD THEREFOR AND USE THEREOF**

(30) Priority: 01.12.2023 CN 202311635917
(71) Applicant: Dongfang Electric Corporation Dongfang Turbine Co., Ltd., Deyang, Sichuan 618000 (CN)
(72) Inventor: GONG, Xiufang, Sichuan 618000 (CN); GAO, Zhenhuan, Sichuan 618000 (CN); SUN, Youbei, Sichuan 618000 (CN); WANG, Tianjian, Sichuan 618000 (CN); NIE, Liping, Sichuan 618000 (CN); LONG, Bin, Sichuan 618000 (CN); GUAN, Yingbo, Sichuan 618000 (CN); LI, Jinqi, Sichuan 618000 (CN); CHEN, Yiwen, Sichuan 618000 (CN); LUO, Chao, Sichuan 618000 (CN); YANG, Lexin, Sichuan 618000 (CN); FANG, Yu, Sichuan 618000 (CN)
(74) Representative: Santarelli
(86) International application number: PCT/CN2024/092207
(87) International publication number: WO 2025/112295

(57) **Abstract**

The present invention belongs to the technical field of alloys. Disclosed are a nickel-based high-temperature alloy with low cracking sensitivity coefficients, a manufacturing method therefor and the use thereof. The nickel-based high-temperature alloy comprises: 16.73-17.40% of Cr, 15.60-16.70% of Co, 0.00-0.01% of Mo, 5.90-6.30% of W, 1.80-2.12% of Ta, 1.40-1.62% of Nb, 1.90-2.10% of Al, 3.40-3.60% of Ti, 0.12-0.14% of C, 0.003-0.007% of B, 0.005-0.009% of Zr and the balance of Ni and inevitable impurity elements. The present invention obtains the nickel-based high-temperature alloy with low cracking sensitivity coefficients, high aluminum and titanium content, high Co+W solid solution strengthening element content and low oxygen content, and turbine blades made from the alloy by means of the additive manufacturing process exhibit high density, high creep strength and low oxygen content, thereby effectively meeting the technical requirements of high-power gas turbines.

## Description

### Technical Field

The present invention belongs to the technical field of alloys, and more particularly relates to a nickel-based superalloy with a low cracking sensitivity coefficient and high aluminum-titanium content, as well as the preparation method and use thereof.

### Background of the Invention

Nickel-based alloys represent a class of superalloys with the widest application and the highest high-temperature strength among superalloys. The reasons for this include the following:
1. Nickel-based alloys are capable of dissolving a substantial amount of alloying elements while maintaining satisfactory microstructural stability.
2. Nickel-based alloys can form coherent, ordered A₃B-type intermetallic compounds. The γ'[Ni3(Al, Ti)] phase serves as a strengthening phase, which effectively strengthens the alloy and enables it to achieve higher high-temperature strength compared to iron-based and cobalt-based superalloys.
3. Chromium-containing nickel-based alloys have better oxidation resistance and gas corrosion resistance than iron-based superalloys.

Therefore, nickel-based superalloys are widely used in manufacturing high-temperature components such as turbine blades, guide vanes, turbine disks, high-pressure compressor disks, and combustion chambers of aircraft, ships, and industrial gas turbines.

In recent years, with the gradual improvement of the work efficiency of gas turbines, the structural design of turbine blades has become increasingly complex. This complexity is mainly reflected in the design structure of the internal cooling channels of turbine blades, which increases the technical difficulty of the casting molding process, and may even be difficult to achieve by the casting molding process. The laser additive manufacturing process that has emerged in recent years can reliably solve the technical deficiencies of the traditional casting molding process in the manufacture of turbine blades.

Gas turbines with high work efficiency require turbine blades with high creep strength to achieve this. Based on the particularity of the above nickel-based superalloy, turbine blades with high creep strength require a nickel-based superalloy with a high aluminum-titanium content to be formed, so that the formed turbine blades have an internal structure with a high-content γ' strengthening phase. However, contradictorily, nickel-based superalloys with high aluminum-titanium content have poor weldability and are prone to cracking during the welding process. Thus, in the laser additive manufacturing process, under the action of the laser heat source, the melting process of nickel-based superalloy powder with high aluminum-titanium content will produce hot cracks, resulting in a large number of micro-cracks in the internal structure of the printed components, which cannot meet the technical requirements of the designed operating conditions. Consequently, indiscriminately pursuing a high aluminum-titanium content in nickel-based superalloys inevitably results in the technical problem of micro-crack formation, which adversely affects the forming quality in laser additive manufacturing processes.

This technical problem has also resonated within the industry. Based on the crack sensitivity of nickel-based superalloys as the evaluation basis, the industry has developed nickel-based superalloy materials with low crack sensitivity but high aluminum-titanium content. For example, the Chinese patent documents disclose "A Nickel-based Superalloy for 3D Printing and Its Powder Preparation Method" (Publication No.: CN 111996414 A, publication date: November 27, 2020), "A Precipitation-Hardening Nickel-based Superalloy with High Plasticity for Additive Manufacturing and Its Design and Preparation Method" (Publication No.: CN 116377286 A, publication date: July 4, 2023), etc. However, among these developed nickel-based superalloy materials, there are elements such as Y, La, Ce, and Mg that are prone to oxidation. Specifically, the technology with Publication No. CN 111996414 A comprises elements Y, La, and Ce that are prone to oxidation, and the technology with Publication No. CN 116377286 A comprises the element Mg that is prone to oxidation. This results in a relatively high oxygen content in the material and an increased oxygen content during the laser additive manufacturing process, which is not conducive to reliably improving the creep strength of the formed components. The formed turbine blades have poor performance when applied in high-efficiency gas turbines.

Based on this, to obtain turbine blades with high creep strength, it is necessary to improve the nickel-based superalloy material to obtain a nickel-based superalloy material with a low cracking sensitivity coefficient, high aluminum-titanium content, and low oxygen content.

### Summary of the Invention

The technical objective of the present invention is, in view of the particularity of the aforementioned nickel-based superalloy and the technical requirements of high-efficiency gas turbines for high-creep-strength turbine blades, to provide a nickel-based superalloy with a low cracking sensitivity coefficient, high aluminum-titanium content, and low oxygen content, as well as the preparation method and use of the nickel-based superalloy.

To achieve the aforementioned technical objective, the technical solution adopted by the present invention is a nickel-based superalloy with a low cracking sensitivity coefficient. The nickel-based superalloy comprises the following alloying elements in percentages by mass:
16.73% to 17.40% of Cr, 15.60% to 16.70% of Co, 5.90% to 6.30% of W, 1.80% to 2.12% of Ta, 1.40% to 1.62% of Nb, 1.90% to 2.10% of Al, 3.40% to 3.60% of Ti, 0.12% to 0.14% of C, 0.003% to 0.007% of B, 0.005% to 0.009% of Zr, balance Ni and incidental impurities.

Furthermore, the nickel-based superalloy also comprises the Mo element; the maximum mass percentage of the Mo element in the nickel-based superalloy is 0.01%.

In one preferred embodiment, the nickel-based superalloy comprises the following alloying elements in percentages by mass: 17.24% of Cr, 16.67% of Co, 0.01% of Mo, 6.09% of W, 1.95% of Ta, 1.47% of Nb, 2.04% of Al, 3.60% of Ti, 0.14% of C, 0.003% of B, 0.009% of Zr, balance Ni and incidental impurities.

In one preferred embodiment, the nickel-based superalloy comprises the following alloying elements in percentages by mass: 16.73% of Cr, 15.60% of Co, 0.005% of Mo, 5.92% of W, 2.12% of Ta, 1.45% of Nb, 2.00% of Al, 3.54% of Ti, 0.12% of C, 0.005% of B, 0.007% of Zr, balance Ni and incidental impurities.

In one preferred embodiment, the nickel-based superalloy comprises the following alloying elements in percentages by mass: 16.90% of Cr, 15.86% of Co, 0.009% of Mo, 6.29% of W, 1.93% of Ta, 1.58% of Nb, 2.02% of Al, 3.54% of Ti, 0.14% of C, 0.005% of B, 0.005% of Zr, balance Ni and incidental impurities.

In one preferred embodiment, the nickel-based superalloy comprises the following alloying elements in percentages by mass: 17.40% of Cr, 16.70% of Co, 0.008% of Mo, 6.00% of W, 1.99% of Ta, 1.62% of Nb, 2.10% of Al, 3.49% of Ti, 0.14% of C, 0.007% of B, 0.006% of Zr, balance Ni and incidental impurities.

In one preferred embodiment, the nickel-based superalloy comprises the following alloying elements in percentages by mass: 17.14% of Cr, 15.70% of Co, 0.01% of Mo, 6.00% of W, 1.99% of Ta, 1.45% of Nb, 2.02% of Al, 3.52% of Ti, 0.14% of C, 0.005% of B, 0.007% of Zr, balance Ni and incidental impurities.

The applicant has found that the cracking sensitivity of nickel-based superalloy materials is mainly considered in terms of the time when cracking is likely to occur during the liquid-phase solidification process and the time used in the stress-relief process. The cracking sensitivity coefficient can be expressed as the ratio between the two. The solidification process comprehensively considers parameters such as solidification speed, time, and phase transformation. Therefore, the cracking sensitivity coefficient can be obtained through non-equilibrium thermodynamics calculations. Based on the crack sensitivity of nickel-based superalloy materials as the evaluation basis, a nickel-based superalloy material with low crack sensitivity but high aluminum-titanium content has been developed.

For the nickel-based superalloy material obtained by the aforementioned technical measures, the cracking sensitivity coefficient of alloy solidification calculated by Thermo-Calc software is below 0.3, which is much lower than that of traditional nickel-based superalloy materials with high aluminum-titanium content, such as nickel-based superalloy materials of grades IN738LC(1.11) and Mar-M247(1.08). Reducing the cracking sensitivity coefficient can ensure that solidification cracks are effectively controlled during the melting process of the laser additive manufacturing process.

The aforementioned technical measures are different from the traditional simple evaluation of the printability of materials in the laser additive manufacturing process based on the high or low content of Al and Ti. Instead, they comprehensively consider the contribution of all elements to the cracking sensitivity coefficient during the solidification process, so as to ensure the maximum addition of Al and Ti, ensure the maximum precipitation of the γ' phase in the obtained material to achieve the optimal high-temperature performance, and improve the creep strength of the formed components. At the same time, while maintaining a high aluminum-titanium content, compared with nickel-based superalloy materials of grades IN738LC and Mar-M247, the aforementioned technical measures have a higher content of Co + W solid-solution strengthening elements, ensuring that the alloy has good high-temperature creep resistance. In addition, the aforementioned technical measures do not contain easily oxidizable elements such as Hf, La, Ce, Y, and Mg, ensuring that the oxygen content of the powder and the oxygen increment during the additive process are minimized.

Therefore, the aforementioned technical measures, in view of the particularity of the aforementioned nickel-based superalloy and the technical requirements of high-efficiency gas turbines for high-creep-strength turbine blades, have obtained a nickel-based superalloy material with the technical characteristics of a low cracking sensitivity coefficient, high aluminum-titanium content, high Co + W solid-solution strengthening element content, and low oxygen content, effectively meeting the technical requirements of high-efficiency gas turbines for high-creep-strength turbine blades formed by the laser additive manufacturing process.

A preparation method for the aforementioned nickel-based superalloy with a low cracking sensitivity coefficient, the preparation method comprises the following technological steps:
Step 1. Charge the alloying elements in formula amounts into a crucible, place the crucible in a vacuum induction furnace, perform induction heating under a vacuum degree of less than 0.1 Pa, raise the temperature to a range of 1,550°C to 1,700°C, and perform high-temperature vacuum melting for a duration of 20minutes to 40 minutes;
Step 2. Charge the alloy ingot into a vacuum consumable electrode arc furnace as a consumable electrode, establish a vacuum degree of less than 0.3 Pa inside the furnace, energize to form an electric arc, subject the alloy ingot to vacuum consumable remelting, and allow the remelted material to cool naturally to obtain a vacuum consumable electrode remelted alloy bar stock substantially free of secondary shrinkage cavity at its center;
Step 3. Place the alloy bar stock into a plasma rotating electrode powder-making device, evacuate the powder-making chamber to a vacuum degree below 0.1 Pa, and fill the powder-making chamber with a He-Ar mixed gas at 0.7 MPa to 0.9 MPa; the plasma gun is operated at a current of 1,100 A to 1,500 A and a voltage of 50 V to 65V; the alloy bar stock is rotated at a rotating speed of 14,000 r/min to 18,000 r/min, with a distance of 30 mm to 50 mm maintained between the plasma gun and the alloy bar. The end of the ultra-high-speed rotating alloy bar is melted into a liquid film under the action of a coaxial plasma arc heating source, and is thrown out to the outer edge of the electrode end under the action of centrifugal force, broken into spheres in the air and rapidly solidified, and finally falls into the powder collector below the powder-making chamber to obtain nickel-based superalloy spherical powder.

The aforementioned technical measures subject the nickel-based superalloy material with a low cracking sensitivity coefficient, high aluminum-titanium content, high Co + W solid-solution strengthening element content, and low oxygen content to vacuum consumable remelting treatment, further reducing the content of impurity elements, increasing the alloy purity, and reducing the content of trace elements enriched at the grain boundaries, thereby further improving the cracking resistance of the alloy, and there is no secondary shrinkage cavity at the center and the alloy is dense. Therefore, the obtained nickel-based superalloy material has high purity, good compactness, and excellent cracking resistance.

Use of the nickel-based superalloy spherical powder with a low cracking sensitivity coefficient prepared by the aforementioned preparation method. Under a high-purity nitrogen atmosphere environment, wherein the spherical powder is classified under a high-purity nitrogen atmosphere to select powder having a particle size in a range of 15 to 53 µm, for use as a feedstock in forming a hot-gas-path turbine blade of a gas turbine by a laser additive manufacturing process. The turbine blades obtained by this technical measure have good compactness, high creep strength, and a low oxygen content (the increment of the impurity element oxygen is less than 80 ppm), effectively meeting the technical requirements of high-power gas turbines.

The beneficial technical effects of the present invention are as follows: the aforementioned technical measures, in view of the particularity of the aforementioned nickel-based superalloy and the technical requirements of high-efficiency gas turbines for high-creep-strength turbine blades, have obtained a nickel-based superalloy material with the technical characteristics of a low cracking sensitivity coefficient, high aluminum-titanium content, high Co + W solid-solution strengthening element content, and low oxygen content (the increment of the impurity element oxygen is less than 80 ppm). The turbine blades formed by the laser additive manufacturing process using the nickel-based superalloy material have good compactness, high creep strength, and a low oxygen content, effectively meeting the technical requirements of high-power gas turbines.

### Brief Description of the Drawings

The present invention will be described in combination with embodiments and accompanying drawings, wherein:
Fig. 1 is a powder morphology diagram of the present invention prepared by the ultra-high-speed rotating electrode method in Embodiment 1.
Fig. 2 is a comparison diagram of the cracking sensitivity coefficients of the nickel-based superalloy materials obtained in Embodiments 1 to 5 and commercially available nickel-based superalloy materials.
Fig. 3 is a micro-metallographic diagram obtained by the laser additive manufacturing process of the nickel-based superalloy material obtained in Embodiment 1.
Fig. 4 is a microstructure diagram obtained by the laser additive manufacturing process of the nickel-based superalloy material obtained in Embodiment 1.

### Detailed Description of Embodiments

All of the features disclosed in the Description, or all of the steps of any method or process so disclosed, may be combined in any way, except combinations where such features and/or steps are mutually exclusive.

Any feature disclosed in the Description can be replaced with other equivalent or similar features, unless otherwise specified. That is, each feature is only an example of series of equivalent or similar features, unless otherwise specified.

The present invention belongs to the technical field of alloys, and particularly relates to a nickel-based superalloy with a low cracking sensitivity coefficient and high aluminum-titanium content, as well as the preparation method and use of the nickel-based superalloy. The main technical solution of the present invention will be specifically described below in combination with multiple embodiments.

### Embodiment 1

The nickel-based superalloy material of the present invention is used to form high-temperature turbine blades for gas turbines by the laser additive manufacturing process, and comprises essentially the following alloying elements in percentages by mass, alloying elements each having a purity of not less than 99.99%: 17.24% of Cr, 16.67% of Co, 0.01% of Mo, 6.09% of W, 1.95% of Ta, 1.47% of Nb, 2.04% of Al, 3.60% of Ti, 0.14% of C, 0.003% of B, 0.009% of Zr, balance Ni and incidental impurities.

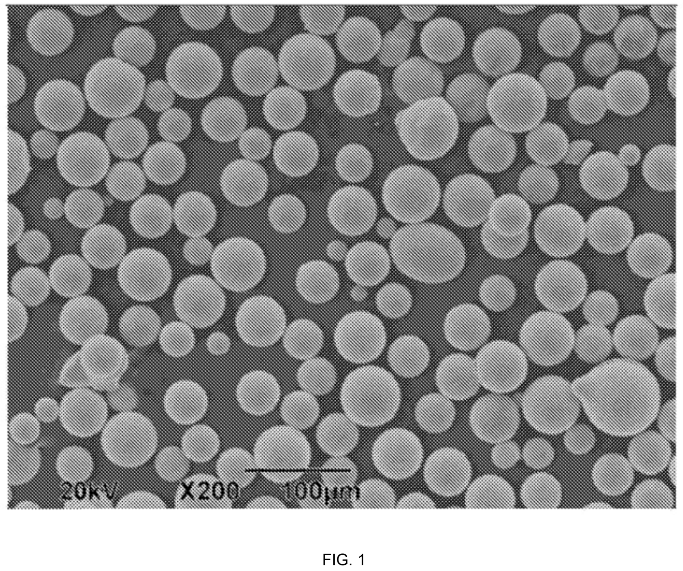

The nickel-based superalloy material with the aforementioned formulated amount is made into spherical powder for the laser additive manufacturing process. The specific preparation method comprises the following technological steps:
Step 1. Charge the alloying elements in formula amounts into a crucible, place the crucible in a vacuum induction furnace,
   perform induction heating under a vacuum degree of less than 0.1 Pa, raise the temperature to 1680°C for high-temperature vacuum melting for 25 minutes;
   The vacuum induction furnace is turned off, and casting is carried out at 1600°C to form an alloy ingot;
Step 2. Charge the alloy ingot into a vacuum consumable electrode arc furnace as a consumable electrode, establish a vacuum degree of less than 0.3 Pa inside the furnace, energize to form an electric arc, subject the alloy ingot to vacuum consumable remelting, and allow the remelted material to cool naturally to obtain a vacuum consumable electrode remelted alloy bar stock substantially free of secondary shrinkage cavity at its center;
Step 3. Place the alloy bar stock into a plasma rotating electrode powder-making device, evacuate the powder-making chamber to below 0.1Pa, and fill the powder-making chamber with 0.8MPa of He and Ar mixed gas;
   The plasma gun is operated at a current of 1,400 A and a voltage of 50 V; the alloy bar stock is rotated at a rotating speed of 17,000 r/min, with a distance of 40 mm maintained between the plasma gun and the alloy bar. The end of the ultra-high-speed rotating alloy bar is melted into a liquid film under the action of the coaxial plasma arc heating source, and is thrown out to the outer edge of the electrode end under the action of centrifugal force, broken into spheres in the air and rapidly solidified, and finally falls into the powder collector below the powder-making chamber, obtaining the nickel-based superalloy spherical powder as shown in Fig. 1.
Step 4. Under a high-purity argon atmosphere, screen out the powder with a particle size range of 15 µm to 53 µm from the nickel-based superalloy spherical powder, and this powder is used as the raw material for the laser additive manufacturing process.

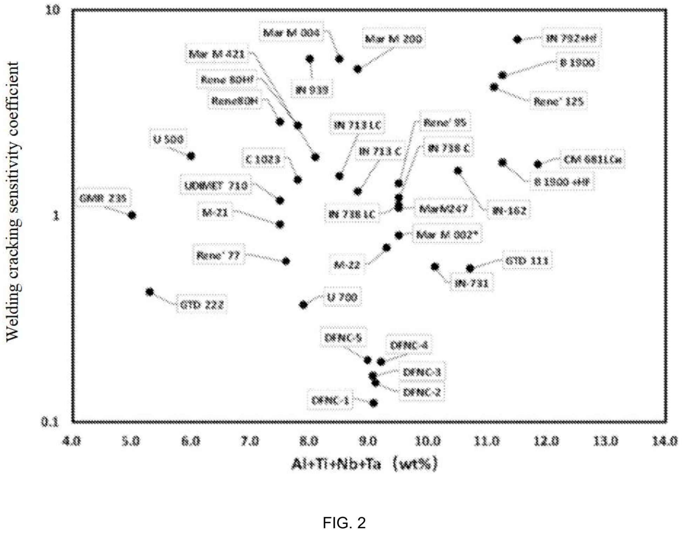

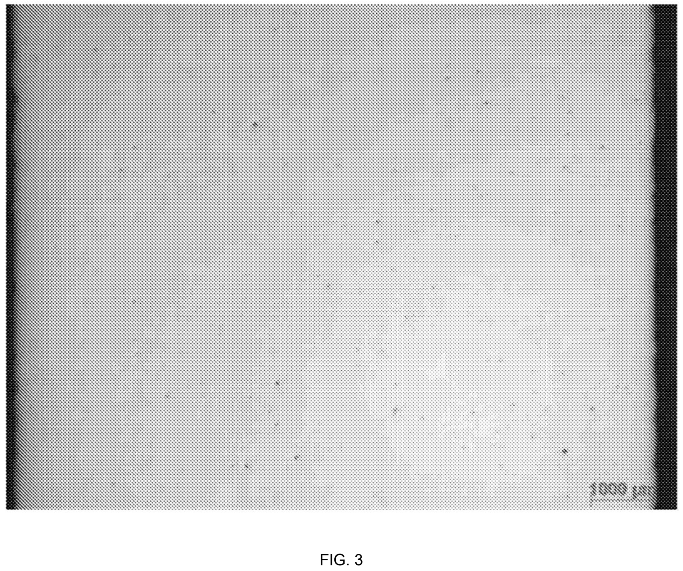

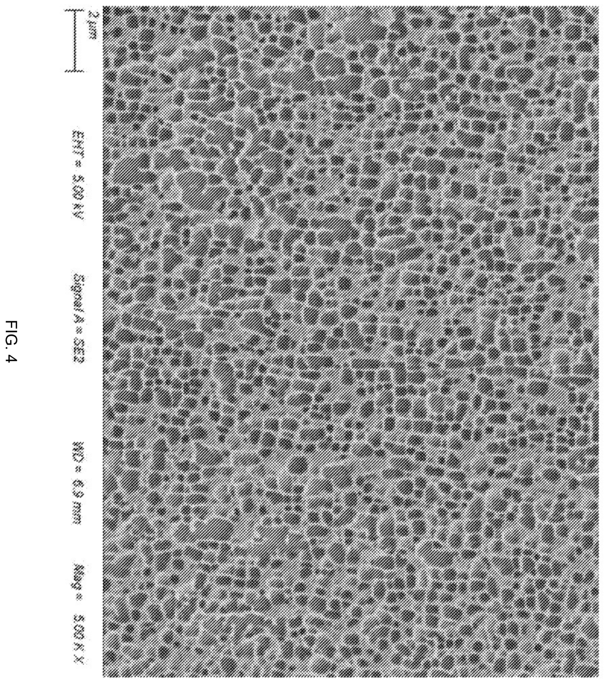

The nickel-based superalloy powder (designated as DFNC-1) prepared in the present embodiment was tested and found to have a weld crater crack sensitivity of 0.16443. The comparison of the cracking sensitivity coefficient with the commercially available nickel-based superalloy material is shown in Fig. 2. The micro-metallographic diagrams of the components obtained by laser additive manufacturing are shown in Fig. 3 and Fig. 4. During the laser additive manufacturing process, the selective melting solidification cracks can be effectively controlled.

### Embodiment 2

The nickel-based superalloy material of the present invention is used to form high-temperature turbine blades for gas turbines by the laser additive manufacturing process, and comprises essentially the following alloying elements in percentages by mass, alloying elements each having a purity of not less than 99.99%: 16.73% of Cr, 15.60% of Co, 0.005% of Mo, 5.92% of W, 2.12% of Ta, 1.45% of Nb, 2.00% of Al, 3.54% of Ti, 0.12% of C, 0.005% of B, 0.007% of Zr, balance Ni and incidental impurities.

The nickel-based superalloy material with the aforementioned formulated amount is made into spherical powder for the laser additive manufacturing process. The specific preparation method comprises the following technological steps:
Step 1. Charge the alloying elements in formula amounts into a crucible, place the crucible in a vacuum induction furnace,
   perform induction heating under a vacuum degree of less than 0.1 Pa, raise the temperature to 1550°C for high-temperature vacuum melting for 40 minutes;
   The vacuum induction furnace is turned off, and casting is carried out at 1500°C to form an alloy ingot;
Step 2. Charge the alloy ingot into a vacuum consumable electrode arc furnace as a consumable electrode, establish a vacuum degree of less than 0.3 Pa inside the furnace, energize to form an electric arc, subject the alloy ingot to vacuum consumable remelting, and allow the remelted material to cool naturally to obtain a vacuum consumable electrode remelted alloy bar stock substantially free of secondary shrinkage cavity at its center;
Step 3. Place the alloy bar stock into a plasma rotating electrode powder-making device, evacuate the powder-making chamber to below 0.1Pa, and fill the powder-making chamber with 0.7MPa of He and Ar mixed gas;
   The plasma gun is operated at a current of 1,100 A and a voltage of 50 V; the alloy bar stock is rotated at a rotating speed of 18,000 r/min, with a distance of 30 mm maintained between the plasma gun and the alloy bar. The end of the ultra-high-speed rotating alloy bar is melted into a liquid film under the action of the coaxial plasma arc heating source, and is thrown out to the outer edge of the electrode end under the action of centrifugal force, broken into spheres in the air and rapidly solidified, and finally falls into the powder collector below the powder-making chamber to obtain nickel-based superalloy spherical powder;
Step 4. Under a high-purity argon atmosphere, screen out the powder with a particle size range of 15 µm to 53 µm from the nickel-based superalloy spherical powder, and this powder is used as the raw material for the laser additive manufacturing process.

The nickel-based superalloy powder (designated as DFNC-2) prepared in the present embodiment was tested and found to have a weld crater crack sensitivity of 0.19778. The comparison of the cracking sensitivity coefficient with the commercially available nickel-based superalloy material is shown in Fig. 2. During the laser additive manufacturing process, the selective melting solidification cracks can be effectively controlled.

### Embodiment 3

The nickel-based superalloy material of the present invention is used to form high-temperature turbine blades for gas turbines by the laser additive manufacturing process, and comprises essentially the following alloying elements in percentages by mass, alloying elements each having a purity of not less than 99.99%: 16.90% of Cr, 15.86% of Co, 0.009% of Mo, 6.29% of W, 1.93% of Ta, 1.58% of Nb, 2.02% of Al, 3.54% of Ti, 0.14% of C, 0.005% of B, 0.005% of Zr, balance Ni and incidental impurities.

The nickel-based superalloy material with the aforementioned formulated amount is made into spherical powder for the laser additive manufacturing process. The specific preparation method comprises the following technological steps:
Step 1. Load the alloying elements in the formula amount into a crucible, place the crucible in a vacuum induction furnace, perform induction heating under a vacuum degree of less than 0.1 Pa, and raise the temperature to 1700 °C for high-temperature vacuum melting for 20 minutes;
   Turn off the vacuum induction furnace, and carry out casting at 1620 °C to form an alloy ingot;
Step 2. Charge the alloy ingot into a vacuum consumable electrode arc furnace as a consumable electrode, establish a vacuum degree of less than 0.3 Pa inside the furnace, energize to form an electric arc, subject the alloy ingot to vacuum consumable remelting, and allow the remelted material to cool naturally to obtain a vacuum consumable electrode remelted alloy bar stock substantially free of secondary shrinkage cavity at its center;
Step 3. Place the alloy bar stock into a plasma rotating electrode powder-making device, evacuate the powder-making chamber to below 0.1Pa, and fill the powder-making chamber with 0.9MPa of He and Ar mixed gas;
   The plasma gun is operated at a current of 1,500 A and a voltage of 65 V; the alloy bar stock is rotated at a rotating speed of 14,000 r/min, with a distance of 50 mm maintained between the plasma gun and the alloy bar. The end of the ultra-high-speed rotating alloy bar is melted into a liquid film under the action of the coaxial plasma arc heating source, and is thrown out to the outer edge of the electrode end under the action of centrifugal force, broken into spheres in the air and rapidly solidified, and finally falls into the powder collector below the powder-making chamber to obtain nickel-based superalloy spherical powder;
Step 4. Under a high-purity argon atmosphere, screen out the powder with a particle size range of 15 µm to 53 µm from the nickel-based superalloy spherical powder, and this powder is used as the raw material for the laser additive manufacturing process.

The nickel-based superalloy powder (designated as DFNC-3) prepared in the present embodiment was tested and found to have a weld crater crack sensitivity of 0.17461. The comparison of the cracking sensitivity coefficient with the commercially available nickel-based superalloy material is shown in Fig. 2. During the laser additive manufacturing process, the selective melting solidification cracks can be effectively controlled.

### Embodiment 4

The nickel-based superalloy material of the present invention is used to form high-temperature turbine blades for gas turbines by the laser additive manufacturing process, and comprises essentially the following alloying elements in percentages by mass, alloying elements each having a purity of not less than 99.99%: 17.40% of Cr, 16.70% of Co, 0.008% of Mo, 6.00% of W, 1.99% of Ta, 1.62% of Nb, 2.10% of Al, 3.49% of Ti**,** 0.14% of C, 0.007% of B, 0.006% of Zr, balance Ni and incidental impurities.

The nickel-based superalloy material with the aforementioned formulated amount is made into spherical powder for the laser additive manufacturing process. The specific preparation method comprises the following technological steps:
Step 1. Charge the alloying elements in formula amounts into a crucible, place the crucible in a vacuum induction furnace,
   perform induction heating under a vacuum degree of less than 0.1 Pa, raise the temperature to 1600°C for high-temperature vacuum melting for 35 minutes;
   The vacuum induction furnace is turned off, and casting is carried out at 1550°C to form an alloy ingot;
Step 2. Charge the alloy ingot into a vacuum consumable electrode arc furnace as a consumable electrode, establish a vacuum degree of less than 0.3 Pa inside the furnace, energize to form an electric arc, subject the alloy ingot to vacuum consumable remelting, and allow the remelted material to cool naturally to obtain a vacuum consumable electrode remelted alloy bar stock substantially free of secondary shrinkage cavity at its center;
Step 3. Place the alloy bar stock into a plasma rotating electrode powder-making device, evacuate the powder-making chamber to below 0.1Pa, and fill the powder-making chamber with 0.8MPa of He and Ar mixed gas;
   The plasma gun is operated at a current of 1,300 A and a voltage of 60 V; the alloy bar stock is rotated at a rotating speed of 16,000 r/min, with a distance of 40 mm maintained between the plasma gun and the alloy bar. The end of the ultra-high-speed rotating alloy bar is melted into a liquid film under the action of the coaxial plasma arc heating source, and is thrown out to the outer edge of the electrode end under the action of centrifugal force, broken into spheres in the air and rapidly solidified, and finally falls into the powder collector below the powder-making chamber to obtain nickel-based superalloy spherical powder;
Step 4. Under a high-purity argon atmosphere, screen out the powder with a particle size range of 15 µm to 53 µm from the nickel-based superalloy spherical powder, and this powder is used as the raw material for the laser additive manufacturing process.

The nickel-based superalloy powder (designated as DFNC-4) prepared in the present embodiment was tested and found to have a weld crater crack sensitivity of 0.07958. The comparison of the cracking sensitivity coefficient with the commercially available nickel-based superalloy material is shown in Fig. 2. During the laser additive manufacturing process, the selective melting solidification cracks can be effectively controlled.

### Embodiment 5

The nickel-based superalloy material of the present invention is used to form high-temperature turbine blades for gas turbines by the laser additive manufacturing process, and comprises essentially the following alloying elements in percentages by mass, alloying elements each having a purity of not less than 99.99%: 17.14% of Cr, 15.70% of Co, 0.01% of Mo, 6.00% of W, 1.99% of Ta, 1.45% of Nb, 2.02% of Al, 3.52% of Ti**,** 0.14% of C, 0.005% of B, 0.007% of Zr, balance Ni and incidental impurities.

The nickel-based superalloy material with the aforementioned formulated amount is made into spherical powder for the laser additive manufacturing process. The specific preparation method comprises the following technological steps:
Step 1. Load the alloying elements in the formula amount into a crucible, place the crucible in a vacuum induction furnace, perform induction heating under a vacuum degree of less than 0.1 Pa, and raise the temperature to 1700 °C for high-temperature vacuum melting for 35 minutes;
   The vacuum induction furnace is turned off, and casting is carried out at 1600°C to form an alloy ingot;
Step 2. Charge the alloy ingot into a vacuum consumable electrode arc furnace as a consumable electrode, establish a vacuum degree of less than 0.3 Pa inside the furnace, energize to form an electric arc, subject the alloy ingot to vacuum consumable remelting, and allow the remelted material to cool naturally to obtain a vacuum consumable electrode remelted alloy bar stock substantially free of secondary shrinkage cavity at its center;
Step 3. Place the alloy bar stock into a plasma rotating electrode powder-making device, evacuate the powder-making chamber to below 0.1Pa, and fill the powder-making chamber with 0.9MPa of He and Ar mixed gas;
   The plasma gun is operated at a current of 1,400 A and a voltage of 50 V; the alloy bar stock is rotated at a rotating speed of 17,000 r/min, with a distance of 45 mm maintained between the plasma gun and the alloy bar. The end of the ultra-high-speed rotating alloy bar is melted into a liquid film under the action of the coaxial plasma arc heating source, and is thrown out to the outer edge of the electrode end under the action of centrifugal force, broken into spheres in the air and rapidly solidified, and finally falls into the powder collector below the powder-making chamber to obtain nickel-based superalloy spherical powder;
Step 4. Under a high-purity argon atmosphere, screen out the powder with a particle size range of 15 µm to 53 µm from the nickel-based superalloy spherical powder, and this powder is used as the raw material for the laser additive manufacturing process.

The nickel-based superalloy powder (designated as DFNC-5) prepared in the present embodiment was tested and found to have a weld crater crack sensitivity of 0.08387. The comparison of the cracking sensitivity coefficient with the commercially available nickel-based superalloy material is shown in Fig. 2. During the laser additive manufacturing process, the selective melting solidification cracks can be effectively controlled.

### Embodiment 6

The nickel-based superalloy material according to the present invention comprises essentially the following alloying elements in percentages by mass, elements each having a purity of not less than 99.99%: 16.80% of Cr, 16.45% of Co, 6.10% of W, 1.80% of Ta, 1.40% of Nb, 1.90% of Al, 3.40% of Ti, 0.13% of C, 0.006% of B, 0.008% of Zr, balance Ni and incidental impurities.

The nickel-based superalloy material with the aforementioned formula amount is used to form the turbine blades of a gas turbine by the traditional casting method.

The aforementioned embodiments are only used to illustrate the present invention, and are not intended to limit the scope thereof.

The present invention is not limited to the detailed description of the implementations mentioned above. The present invention expands to any new feature or any new combination disclosed in the Description, and steps in any new method or process or any new combination disclosed.

## Claims

1. A nickel-based superalloy with a low cracking sensitivity coefficient, wherein the nickel-based superalloy comprises the following alloying elements in percentages by mass: 16.73% to 17.40% of Cr, 15.60% to 16.70% of Co, 5.90% to 6.30% of W, 1.80% to 2.12% of Ta, 1.40% to 1.62% of Nb, 1.90% to 2.10% of Al, 3.40% to 3.60% of Ti, 0.12% to 0.14% of C, 0.003% to 0.007% of B, 0.005% to 0.009% of Zr, balance Ni and incidental impurities.

2. The nickel-based superalloy with a low cracking sensitivity coefficient according to claim 1, wherein the nickel-based superalloy further comprises a Mo element; the Mo element content is up to 0.01% by weight.

3. The nickel-based superalloy with a low cracking sensitivity coefficient according to claim 2, wherein the nickel-based superalloy comprises the following alloying elements in percentages by mass: 17.24% of Cr, 16.67% of Co, 0.01% of Mo, 6.09% of W, 1.95% of Ta, 1.47% of Nb, 2.04% of Al, 3.60% of Ti, 0.14% of C, 0.003% of B, 0.009% of Zr, balance Ni and incidental impurities.

4. The nickel-based superalloy with a low cracking sensitivity coefficient according to claim 2, wherein the nickel-based superalloy comprises the following elements in percentages by mass: 16.73% of Cr, 15.60% of Co, 0.005% of Mo, 5.92% of W, 2.12% of Ta, 1.45% of Nb, 2.00% of Al, 3.54% of Ti, 0.12% of C, 0.005% of B, 0.007% of Zr, balance Ni and incidental impurities.

5. The nickel-based superalloy with a low cracking sensitivity coefficient according to claim 2, wherein the nickel-based superalloy comprises the following alloying elements in percentages by mass: 16.90% of Cr, 15.86% of Co, 0.009% of Mo, 6.29% of W, 1.93% of Ta, 1.58% of Nb, 2.02% of Al, 3.54% of Ti, 0.14% of C, 0.005% of B, 0.005% of Zr, balance Ni and incidental impurities.

6. The nickel-based superalloy with a low cracking sensitivity coefficient according to claim 2, wherein the nickel-based superalloy comprises the following alloying elements in percentages by mass: 17.40% of Cr, 16.70% of Co, 0.008% of Mo, 6.00% of W, 1.99% of Ta, 1.62% of Nb, 2.10% of Al, 3.49% of Ti, 0.14% of C, 0.007% of B, 0.006% of Zr, balance Ni and incidental impurities.

7. The nickel-based superalloy with a low cracking sensitivity coefficient according to claim 2, wherein the nickel-based superalloy comprises the following alloying elements in percentages by mass: 17.14% of Cr, 15.70% of Co, 0.01% of Mo, 6.00% of W, 1.99% of Ta, 1.45% of Nb, 2.02% of Al, 3.52% of Ti, 0.14% of C, 0.005% of B, 0.007% of Zr, balance Ni and incidental impurities.

8. A preparation method of the nickel-based superalloy with a low cracking sensitivity coefficient according to any one of claims 1 to 7, wherein the preparation method comprises the following technological steps:
Step 1. Melt the alloying elements in the formula amount into an alloy ingot in a vacuum induction furnace;
Step 2. Subject the alloy ingot to a vacuum arc remelting process to form an alloy bar stock free of secondary shrinkage cavity at its center;
Step 3. The alloy bar stock is made into nickel-based superalloy spherical powder through an ultra-high-speed rotating electrode.

9. The preparation method according to claim 8, wherein in step 1, the vacuum degree of the vacuum induction furnace is less than 0.1 Pa.

10. The preparation method according to claim 8, wherein in step 1, the melting temperature of the alloy in the vacuum furnace is 1,550°C to 1,700°C, and the melting time is 20 minutes to 40 minutes.

11. The preparation method according to 8, wherein, in step 1, after melting, casting is carried out at 1500°C to 1620°C to form an alloy ingot.

12. The preparation method according to claim 8, wherein in step 2, the vacuum arc remelting is performed using a vacuum arc remelting furnace, wherein the vacuum arc remelting process is conducted under a vacuum level of less than 0.3 Pa.

13. The preparation method according to claim 8, wherein the alloy bar stock is formed by natural cooling following the vacuum arc remelting process in step 2.

14. The preparation method according to claim 8, wherein in step 3, the preparation of the nickel-based superalloy spherical powder is completed by using the plasma rotating electrode powder-making device.

15. The preparation method according to claim 14, wherein the powder-making chamber in the plasma rotating electrode powder-making device is evacuated to a vacuum of less than 0.1 Pa, and a He-Ar mixed gas of 0.9 MPa is filled into the powder-making chamber.

16. The preparation method according to claim 14, wherein the plasma gun is operated at a current of 1,100 A to 1,500 A and a voltage of 50 V to 65 V; the alloy bar stock is rotated at a rotating speed of 14,000 rpm to 18,000 rpm; and a distance of 30 mm to 50 mm is maintained between the plasma gun and the alloy bar stock.

17. A use of the nickel-based superalloy spherical powder with a low cracking sensitivity coefficient prepared by the preparation method of the nickel-based superalloy with a low cracking sensitivity coefficient according to any one of claims 8 to 16, wherein the spherical powder is used as a raw material for forming a high-temperature turbine blade of a gas turbine by a laser additive manufacturing process.

18. The use according to claim 17, wherein the raw material is the powder with a particle size of 15 µm to 53 µm screened out from the nickel-based superalloy spherical powder.

19. The use according to claim 17, wherein the screening of the powder is completed under the atmosphere of high-purity argon.
